# FASCICULE DE BREVET EUROPEEN

(11) **EP 3 240 710 B1**
(45) Date de publication et mention de la délivrance du brevet: **27.01.2021**
(21) Numéro de dépôt: 15832818.7
(22) Date de dépôt: 29.12.2015
(51) Int. Cl.: B60T 13/74, F16D 65/18

(54) **ACTIONNEUR LINEAIRE, ACTUATEUR DE FREIN A DISQUE, PROCEDE DE FABRICATION D'UNE DENTURE INTERIEURE**
LINEARANTRIEB, SCHEIBENBREMSBETÄTIGER, VERFAHREN ZUR HERSTELLUNG EINER INTERNEN VERZAHNUNG
LINEAR ACTUATOR, DISC-BRAKE ACTUATOR, METHOD OF MANUFACTURING AN INTERNAL TOOTHSET

(30) Priorité: 29.12.2014 FR 1463388
(43) Date de publication de la demande: 08.11.2017
(73) Titulaire: Foundation Brakes France, 93700 Drancy (FR)
(72) Inventeur: PASQUET, Thierry, 94700 Vincennes (FR); FOURNET, Paul, 95410 Groslay (FR); BOURLON, Philippe, 77230 Dammartin En Goele (FR); CUBIZOLLES, Cyril, 93700 Drancy (FR)
(74) Mandataire: IPAZ
(86) Numéro de dépôt international: PCT/FR2015/053767
(87) Numéro de publication internationale: WO 2016/108029

(56) Documents cités:
- EP-A1- 0 133 300
- EP-A1- 0 139 116
- DE-U1-202005 015 404
- US-A- 4 804 073

## Description

L'invention se rapporte à actionneur à entraînement rotatif et sortie linéaire, notamment un actuateur électrique de freinage. Il comprend au moins un train épicycloïdal

Cet actionneur un étage de réduction d'au moins un train épicycloïdal reçoit un entraînement en rotation pour entraîner en rotation un mécanisme vis-écrou, produisant un déplacement linéaire coaxial. Ce train entraîne une vis formant un mécanisme vis-écrou avec un piston entourant ledit train épicycloïdal. Selon l'invention, le piston porte une denture intérieure "croisée" formée selon deux orientations différentes, dont l'une engrène avec la vis et l'autre avec les satellites du train épicycloïdal.

L'invention concerne aussi un procédé de fabrication d'un cylindre à denture intérieure, et en particulier du piston formant une couronne filetée de cet actionneur. Ce procédé comprend un matriçage d'une plaque plane, qui est enroulée, soudée et noyée dans un piston moulé.

### Etat de la technique

Le domaine de l'invention est actionneurs linéaires, typiquement avec une motorisation électrique. Il est visé en particulier des usages embarqués pour de tels actionneurs, par exemple celui des freins de véhicules routiers, plus particulièrement des véhicules automobiles légers et utilitaires, et notamment à quatre roues.

Dans un tel véhicule, la fonction de frein de service consiste principalement à ralentir le véhicule et obtenir son arrêt. Dans la plupart des automobiles actuelles, le frein de service est assuré par des freins à tambour ou des freins à disque, ou à disques à l'avant du véhicule et à tambours à l'arrière à véhicule.

La fonction de frein de stationnement consiste à maintenir un véhicule immobilisé de façon continue pendant de longues durées. La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement, et le plus souvent uniquement sur les freins arrière.

Depuis longtemps, les freins sont en général actionnés par une pression hydraulique pour les freins de service, et pour les freins de stationnement par traction d'un câble en général à l'aide d'un levier à cliquet.

Depuis une dizaine d'années, il est devenu courant de prévoir un système motorisé voire automatisé de gestion du frein de stationnement, en commandant un actionneur électrique. L'actionneur électrique est souvent situé à l'extérieur du frein lui-même, et fonctionne par exemple en exerçant une traction sur un câble en lieu et place de la commande manuelle. Une telle gestion extérieure présente différents inconvénients, par exemple complexité et coût de fabrication et de maintenance.

Dans le même temps, il est recherché aussi de réaliser des freins à fonctionnement purement électrique, c'est à dire y compris la fonction de frein de service.

Ainsi, il est intéressant de réaliser un frein dont le ou les actionneurs électriques soient entièrement compris dans le mécanisme de base du frein ou "base de freinage", "foundation brake" en Anglais, c'est à dire la partie qui est directement située sur ou autour de la roue.

Qu'il s'agisse de freins à disque ou de freins à tambour, a cinématique de ces mécanismes utilise un déplacement assez faible mais nécessite un effort de serrage assez important. Pour cette raison, les motorisations électriques sont souvent choisies à vitesse de rotation élevée, ce qui permet de limiter leur taille et leur poids pour une puissance donnée, mais oblige à prévoir une très grande démultiplication.

Pour les freins à tambour, par exemple, le document FR 13 63706 propose ainsi un actionneur électrique séparé du cylindre hydraulique. Cet actionneur électrique applique un effort linéaire par un mécanisme vis-écrou entraîné par une transmission de trois pignons extérieurs, elle-même entraînée par un motoréducteur à deux trains épicycloïdaux en série.

Pour les freins à disque, par exemple, le document US 4 804 073 propose un étrier de frein dont le boîtier reçoit un actionneur électrique comprenant un mécanisme vis-écrou situé à l'intérieur du piston hydraulique, entraîné coaxialement par un réducteur épicycloïdal différentiel à double couronne, lui-même entraîné par un moteur. Ce réducteur utilise une couronne fixe et une mobile, laquelle est accouplée en rotation avec la tête d'une vis qui pénètre à l'intérieur de la chambre hydraulique, et coopère avec un écrou maintenu fixe en rotation. Lorsqu'il est déplacé en translation par la rotation de la vis, cet écrou déplace le piston qui appuie sur une garniture de frottement.

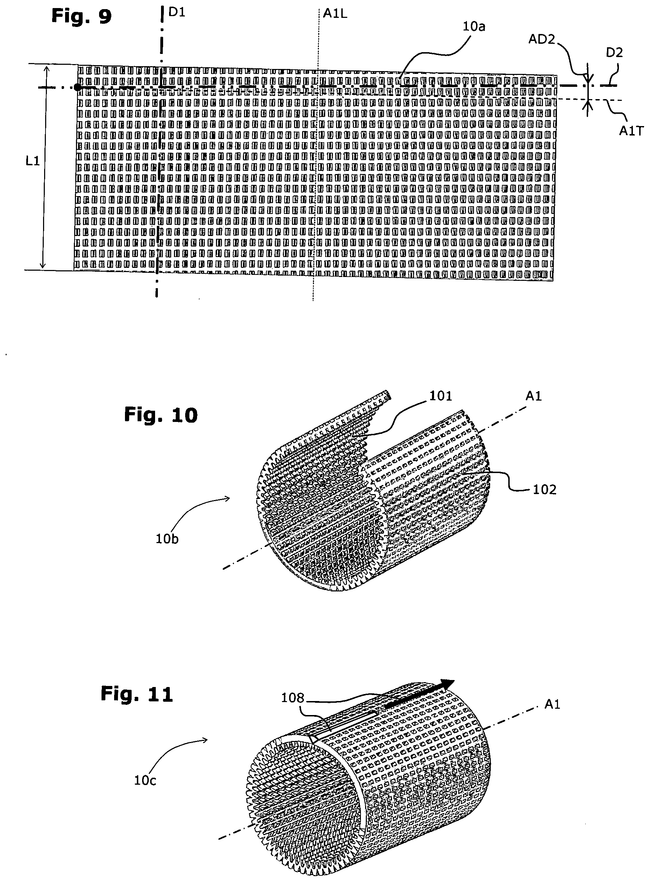

Cependant, la réduction de l'ordre de 1/115 fournie par un tel réducteur peut être insuffisante, en particulier pour fournir des efforts importants, et/ou impose une taille de moteur qui devient gênante sur le plan de l'encombrement. A cet effet, par exemple dans la fig.9 du même document, il a été proposé de réaliser un ensemble motoréducteur comprenant un étage supplémentaire de pignons extérieurs, dont le moteur est monté sur le côté du piston avec un arbre sortant du côté opposé à celui du piston. Cependant une telle configuration présente encore des contraintes d'encombrement, et potentiellement un poids supérieur.

Un but de l'invention est de pallier les inconvénients de l'état de la technique, et en particulier de fournir un actionneur électrique produisant un meilleur compromis entre une grande réduction et un faible poids et encombrement, pour tous types de frein, uniquement électriques ou mixtes hydrauliques, et en particulier pour les freins à disque.

Cet objectif est recherché conjointement avec des avantages en matière de simplicité, coût et fiabilité, de fabrication et d'entretien.

### Exposé de l'invention

L'invention propose un dispositif de réducteur ou d'actionneur, à sortie linéaire et entraînement par moteur rotatif, notamment un actuateur linéaire de freinage électrique. Ce dispositif est du type comprenant au moins un train épicycloïdal incluant un groupe de satellites en rotation selon un axe de train autour d'un pignon planétaire et à l'intérieur d'une couronne circulaire coaxiale audit train planétaire, où lesdits satellites sont portés par un porte-satellites et engrènent à la fois avec une denture extérieure dudit pignon planétaire et avec une denture intérieure, formée dans ladite couronne circulaire selon un premier motif présentant une première orientation déterminée.

Dans ce dispositif, ledit train épicycloïdal reçoit un entraînement en rotation et forme au moins un étage de réduction pour entraîner en rotation un mécanisme vis-écrou, dont la sortie produit un déplacement linéaire selon une direction coaxiale audit train épicycloïdal.

Selon l'invention, ce dispositif est caractérisé en ce que ledit train épicycloïdal entraîne un élément fileté mâle qui lui est coaxial, lequel coopère avec un filetage femelle formé dans la surface intérieure de ladite couronne selon un deuxième motif présentant une deuxième orientation différente de la première orientation, ladite couronne formant ainsi une couronne filetée qui coopère avec ledit élément fileté mâle pour former ledit mécanisme vis-écrou. Selon l'invention, cette couronne présente ainsi des reliefs de filetage femelle entrecroisés avec des reliefs de denture intérieure de type pignon, pour former une denture "croisée" qui est apte à fonctionner aussi bien en denture de couronne de train épicycloïdal qu'en filetage d'écrou.

Cette couronne comporte ainsi au moins une région à denture croisée, et qui peut donc coopérer avec les satellites du réducteur ou avec la vis du mécanisme vis-écrou selon la position longitudinale de cette couronne. Cette double fonctionnalité en position longitudinale permet de minimiser la longueur de l'ensemble tout en conservant le même diamètre pour la couronne et l'écrou, ce qui permet de minimiser aussi l'encombrement radial.

Alternativement ou en combinaison, pour un encombrement donné, il est ainsi possible d'obtenir une plus grande force d'appui ou une plus grande vitesse, voire les deux.

Bien que la fabrication d'une telle couronne filetée puisse engendrer des contraintes techniques qui pourraient paraître rédhibitoire, un tel dispositif permet un meilleur compromis entre les contraintes techniques qui s'imposent au concepteur. Il est ainsi possible d'obtenir de meilleures performances pour les différents paramètres, ainsi que d'alléger les contraintes d'autres sous-ensembles qui en dépendent.

Par exemple, dans le cas d'un actionneur utiliser pour activer un frein de véhicule, la diminution du poids et de l'encombrement de l'actionneur, élément non non-suspendu dans un véhicule, permet d'alléger les contraintes qui pèsent sur les autres parties du véhicule comme les suspensions.

On obtient en outre une plus grande souplesse de conception, et d'adaptation environnement à un autre, et par exemple d'un modèle de véhicule à un autre.

Différents avantages sont apportés par les particularités suivantes de l'invention, qui peuvent avantageusement être combinées entre elles :
- le relief de la denture intérieure de couronne de train et le relief du filetage femelle, au sein de la denture croisée, s'étendent radialement (chacun entre ses creux les plus profonds et ses bosses les plus proéminentes) sur une plage radiale de denture et une plage radiale de filetage qui présentent entre elles au moins une zone d'intersection ;
- l'étage de réduction épicycloïdal comprend au moins deux trains épicycloïdaux coaxiaux dont les satellites engrènent avec la denture intérieure d'une même couronne (sous la forme d'une pièce unique ou plusieurs éléments solidaires, par exemple présentant une continuité de denture) ;
- la couronne (1) présente une denture (101) croisée qui est compatible avec les satellites (32, 42) d'au moins deux trains épicycloïdaux (PR2, PR3) contigus (permettant ainsi un déplacement linéaire selon une course plus importante) ;
- l'étage de réduction épicycloïdal comprend au moins deux trains épicycloïdaux montés en série, par exemple trois voire plus, dont chacun est entraîné en entrée par son pignon planétaire et fournit en sortie un entraînement par la rotation de son porte-satellites.

### Application à un frein de véhicule

Dans une famille de modes de réalisation préférés, l'invention propose un actionneur linéaire à entraînement électrique pour frein de véhicule, comprenant un dispositif de réducteur ou actionneur tel qu'exposé ici, dans lequel la couronne filetée est solidaire de ou forme un piston de frein qui est maintenu fixe en rotation et est agencé pour que son déplacement exerce un effort de serrage par déplacement linéaire d'au moins une garniture de frottement vers une piste de frottement.

Un tel mécanisme d'actionneur est envisagé pour activer un frein de véhicule de différent type, par exemple à tambour ou à disque, par exemple pour la fonction de frein de stationnement mais aussi de frein de service.

L'invention propose ainsi un tel actionneur linéaire de frein de véhicule, en particulier pour étrier de frein à disque, du type fournissant un effort de serrage par déplacement d'un piston par un mécanisme vis-écrou entraîné en rotation par un réducteur.

Un tel actionneur comprend au moins un train épicycloïdal comprenant un porte-satellites portant un groupe de satellites engrenant d'une part avec un pignon planétaire et d'autre part avec une couronne comprenant une denture formée selon une première orientation sur la surface intérieure d'un piston formant un cylindre de révolution coaxial audit train épicycloïdal.

En outre, ce train épicycloïdal entraîne en sortie un élément fileté qui lui est coaxial et porte sur sa surface extérieure un filetage coopérant avec un filetage formé sur la même surface intérieure dudit piston selon une deuxième orientation distincte de la première orientation, entraînant ainsi ledit piston en translation par rapport audit piston selon son axe.

Par cette configuration, on obtient ainsi une diminution de l'encombrement radial par confusion de la couronne et de la vis, et longitudinal par recouvrement de la totalité des trains épicycloïdaux par le piston lors de sa rétractation, tout en permettant une grande démultiplication combiné avec un faible nombre de pièces et une simplicité du mécanisme à la fabrication comme à l'utilisation.

Plus particulièrement, un tel actionneur comprend au moins un premier et un deuxième trains épicycloïdaux montés en série, entraînés chacun en entrée par leur pignon planétaire et fournissant une réduction en sortie par leur porte-satellite, et dont les satellites engrènent selon la première orientation avec la même denture du piston, par exemple une denture droite c'est à dire longitudinale. Ce piston, fixé par ailleurs en rotation, est déplacé en translation longitudinale par une coopération de cette même denture intérieure, mais selon la deuxième orientation, avec un élément fileté entraîné voire en rotation par le porte-satellites du deuxième train épicycloïdal. Par exemple, ce filetage mâle peut être formé directement dans la surface extérieure de ce deuxième porte-satellites. On obtient ainsi une diminution de l'encombrement radial par confusion de la couronne et de la vis, et longitudinal par recouvrement de la totalité des trains épicycloïdaux par le piston lors de sa rétractation.

Ce type de configuration d'actionneur se combine particulièrement bien avec le procédé de fabrication exposé ici, qui en permet donc une production de façon industrielle, fiable et abordable sur le plan économique.

Selon un autre aspect de l'invention, il est en outre proposé un frein de véhicule comprenant un ou plusieurs actionneurs de frein tel qu'exposé ici, ou un véhicule ou sous-ensemble de véhicule comprenant au moins un tel frein ou au moins un tel actionneur de frein.

### Fabrication du piston

La couronne filetée peut être fabriquée de différentes façons connues, par exemple par usinage successifs ou par électroérosion.

Cependant, la fabrication d'une couronne à denture intérieure est un problème relativement complexe, en particulier lorsqu'elle est formé dans un alésage borgne, c'est-à-dire qui n'est ouvert qu'à une seule de ses deux extrémités, et même lorsqu'elle ne présente qu'un seul motif de denture ou filetage. La réalisation d'une denture à l'intérieur d'un alésage est un travail délicat et coûteux. Les matériaux employés doivent être suffisamment résistants, en général un matériau métallique.

De nombreuses méthodes de mise en forme connues sont irréalisables dans la surface intérieure d'un alésage, et les fabrications par moulage métallique sont le plus souvent insuffisamment précises pour ne pas nécessiter une finition par d'autres moyens.

Il est connu, au moins pour la finition, d'usiner la surface intérieure par enlèvement de matière en y introduisant un outil en porte-à-faux tourné vers l'extérieur, en tournage ou en fraisage linéaire selon l'axe de l'alésage et selon la forme à réaliser.

Bien qu'étant le type d'usinage le plus économique, un tel processus reste toutefois complexe et coûteux, et le résultat doit encore être ébavuré, opération qui est elle-aussi difficile à réaliser sur une telle surface concave et peu accessible.

De plus, la configuration d'un tel actionneur nécessite en général que la pièce d'appui présente une extrémité fermée, et le choix d'une fermeture par assemblage représente une complexité, un nombre de pièces et un risque en fiabilité plus importants. Or, pour ces opérations d'usinage et y compris pour la finition, la difficulté est encore plus importante lorsque qu'il s'agit d'un alésage borgne.

Selon un cinquième aspect de l'invention, possiblement indépendant de l'actionneur lui-même, un autre but de l'invention est de permettre une production plus rapide, plus économique et plus fiable d'une couronne à denture intérieure, à motif simple ou croisé, notamment dans un alésage borgne et en particulier pour réaliser un piston d'actionneur tel qu'exposé ici. Ces objectifs sont recherchés tout en maintenant ou améliorant les qualités de charge admissible, de fiabilité et de résistance à l'usure, et de finition géométrique et de surface d'un tel piston

Selon ce cinquième aspect de l'invention, possiblement mais non obligatoirement conforme avec les précédents, et pouvant être mise en oeuvre indépendamment des précédents, il est alors proposé un procédé de fabrication d'un cylindre à denture intérieure, simple ou croisée, et en particulier un piston de frein formant une telle couronne. Selon cet aspect, ce procédé comprend les étapes suivantes :
- fourniture d'une plaque métallique plane ou bidimensionnelle d'un matériau métallique (présentant une température de fusion déterminée) ;
- formation sur au moins une face de ladite plaque d'au moins un motif de denture par déformation plastique (c'est à dire en phase solide, à une température inférieure à ladite température de fusion) par forgeage ou estampage ou emboutissage au moyen d'au moins une matrice de forme complémentaire à ladite denture ;
- mise en forme de ladite plaque par flexion plastique (en phase solide) de façon à former un cylindre de révolution portant ladite denture sur sa surface intérieure ;
- réalisation d'un piston bi-matière présentant un espace intérieur délimité par la surface intérieure dudit cylindre, par coulée d'au moins un matériau durcissable autour de la surface extérieure du cylindre au sein d'un moule entourant ladite paroi, à une température inférieure à la température de fusion dudit cylindre, formant ainsi une paroi extérieure dudit piston;
et en ce que l'étape de formation de denture est réalisée avec une ou plusieurs matrices dont la forme est agencée pour réaliser une denture présentant au moins deux motifs entrecroisés présentant deux orientations différentes; dans lequelles - la denture présente un premier motif réalisant une denture à sillons parallèles entre eux selon une première orientation, répartis selon un premier axe orienté de façon à entourer de façon uniforme l'axe de révolution du piston une fois celui-ci formé, notamment selon une première orientation parallèle audit axe de révolution; et - ladite denture présente un deuxième motif réalisant un filetage hélicoïdal à un ou plusieurs filets selon une deuxième orientation croisant ladite première orientation selon un angle de filetage déterminé.

De préférence, la paroi extérieure du piston est formée par coulée d'un matériau de type bakélite ou résine phénolique.

Il est aussi possible d'utiliser différents types connus de résine thermodurcissante, par exemple par polymérisation ou réticulation, ou un matériau thermoplastique, voire un alliage métallique léger à point de fusion inférieur à celui du matériau de la plaque.

Ainsi la production d'une denture pour train épicycloïdal, en particulier entrecoupée d'un filet de pas de vis, est réalisée par un estampage, emboutissage et/ou extrusion à partir d'une tôle ou plaque, prédécoupée ou en continu. Ce type de procédé permet de ne pas créer de bavures et d'obtenir une très grande précision et répétabilité des dentures, en tout cas dans la zone couverte par l'action de la matrice. On obtient ainsi un procédé rapide en temps de cycle, voire même permettant une production en continu. Ce cylindre est ensuit surmoulé pour réaliser la finition et ainsi obtenir le piston complet, de préférence en résine phénolique. On obtient ainsi une production fiable, rapide, économique. Celle-ci permet ainsi une bonne résistance mécanique, fournie par la denture métallique, combinée à un gain de poids qui permet de réduire les inerties de fonctionnement et la masse non suspendue. L'absence ou la baisse du nombre d'opérations d'usinage et de l'ébavurage qui va avec permet en particulier un gain économique.

Des modes de réalisation variés de l'invention sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de mise en oeuvre nullement limitatif, et des dessins annexés sur lesquels :
- la FIGURE 1 une vue à l'échelle en coupe partielle d'une perspective d'un étrier coulissant de frein à disque, représenté sans garnitures ni paroi d'extrémité du piston, qui illustre un premier exemple mode de réalisation de l'invention, avec actionneur à double train en série et motoréducteur annulaire à l'extérieur de l'étrier ;
- la FIGURE 2 est une vue à l'échelle en coupe longitudinale du piston avec étage de réduction épicycloïdal de la FIGURE 1 ;
- la FIGURE 3 est un schéma cinématique qui illustre le fonctionnement de l'actionneur de la FIGURE 1 ;
- la FIGURE 4 est une vue à l'échelle en éclaté des principales pièces de l'actionneur de la FIGURE 1 sans son motoréducteur, dans une variante avec transmission de l'appui du piston par un insert simple et un roulement de butée de piston ;
- la FIGURE 5 est une vue à l'échelle en coupe longitudinale qui illustre la liaison entre le porte-satellites fileté et l'arbre d'actionneur de la variante de la FIGURE 4 ;
- la FIGURE 6 est une vue à l'échelle en perspective de l'étage de réduction épicycloïdal monté sur l'arbre d'actionneur et sans le piston ;
- la FIGURE 7 est une vue en section longitudinale de la surface intérieure et de la denture croisée du piston du mode de réalisation des FIGURE 1, FIGURE 2 et FIGURE 4 ;
- la FIGURE 8 est un schéma cinématique qui illustre un deuxième exemple de mode de réalisation de l'invention, avec actionneur à triple train épicycloïdal en série dont deux dans le piston, et moteur à l'extérieur de l'étrier ;
- les FIGURE 9 et suivantes illustrent différentes étapes d'un procédé de fabrication de piston selon l'invention dans un exemple de mode de réalisation, appliqué à un piston avec denture intérieure à double orientation, droite et hélicoïdale :
   ∘ en FIGURE 9, en vue de dessus à l'échelle de la plaque plane avec denture formée,
   ∘ en FIGURE 10, en perspective à l'échelle de la plaque en cours de mise en forme,
   ∘ en FIGURE 11, en perspective à l'échelle du cylindre une fois formé et soudé,
   ∘ en FIGURE 12, en coupe longitudinale schématique du moulage du piston avec insertion du cylindre,
   ∘ en FIGURE 13, en perspective à l'échelle du côté ouvert du piston fini,
   ∘ en FIGURE 14, en perspective à l'échelle du côté fermé du piston fini.

### Description d'un exemple de mode de réalisation

### Structure et fonctionnement de l'actionneur

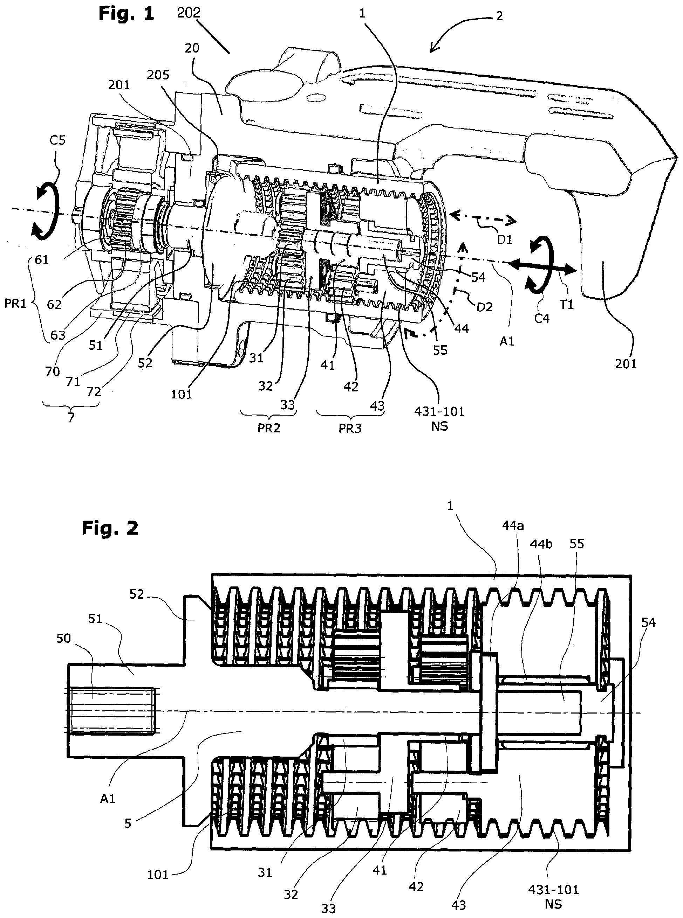

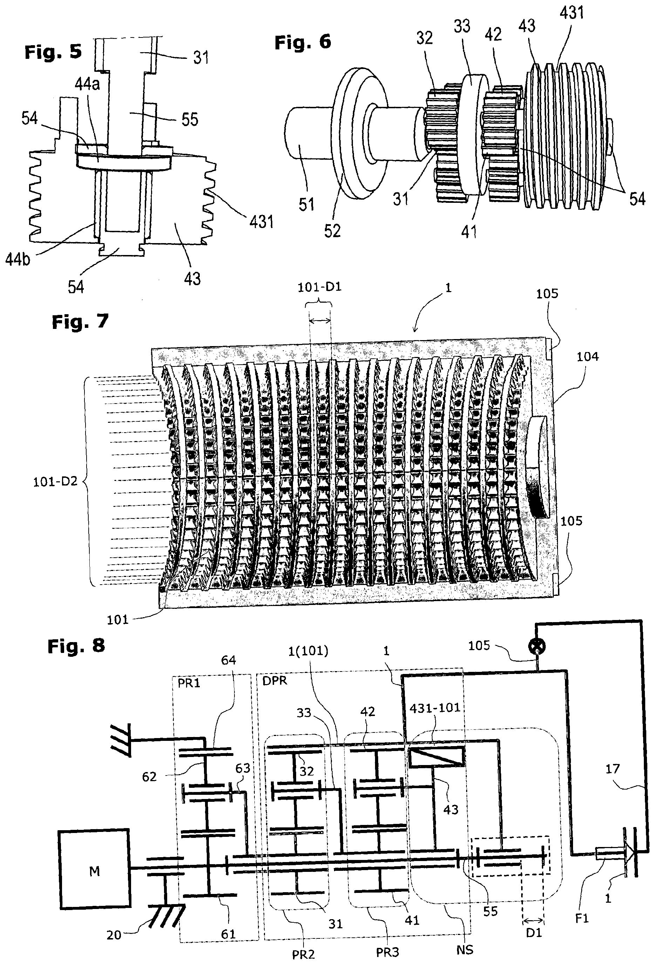

Les FIGURE 1 à FIGURE 4, et FIGURE 6 et FIGURE 7, illustrent un exemple d'étrier 2 de frein à disque, incluant un actionneur selon un premier exemple mode de réalisation de l'invention, avec actionneur à double train en série et motoréducteur annulaire à l'extérieur de l'étrier ;

Dans cet exemple, l'étrier est d'un type à montage flottant à un seul piston 1 actionné uniquement par un actionneur électrique selon l'invention, réalisant ainsi un étrier de type tout électrique, pour le freinage de service et pour le frein de stationnement. D'autres configurations sont prévues, par exemple avec plusieurs pistons et/ou plusieurs actionneurs, en version flottante ou en version fixe, possiblement combiné(s) avec un ou plusieurs pistons hydrauliques.

Dans le cas décrit ici, l'actionneur est monté dans un étrier (2) de frein à disque comprenant deux branches (201, 202) en vis-à-vis qui chevauchent la périphérie d'un disque de frein (non représenté). L'actionneur comprend un arbre d'actionneur (5), coaxial au piston (1), et qui est prévu pour traverser l'une (202) desdites branches d'étrier et porte une flasque d'appui (52) agencée pour prendre un appui axial sur ladite branche (202) depuis l'intérieur de l'étrier.

La partie d'extrémité (55) dudit arbre, située du côté intérieur de l'étrier, porte l'étage de réduction épicycloïdale (DPR) et le piston de frein (1). La partie d'entrée (51) dudit arbre, située du côté intérieur de l'étrier, porte ou est prévue pour recevoir un moteur (M) ou un motoréducteur électrique (7). Dans cet exemple, le motoréducteur 7 est monté "en bout" c'est à dire avec le moteur coaxial de l'arbre d'actionneur 5.

Dans cet exemple de mode de réalisation, la partie d'entrée (51) de l'arbre d'actionneur (5) est entraînée en rotation par un train épicycloïdal amont (PR0), pouvant être qualifié d'intégré, disposé coaxialement à un moteur, que l'on pourrait qualifier d'annulaire. Ce moteur comporte un rotor intérieur (71) mobile à l'intérieur d'un stator (72) extérieur, lequel est solidaire d'un boîtier de moteur (70), qui est fixé sur le boîtier (20) de l'étrier par une flasque intermédiaire 204.

La couronne (64) dudit train épicycloïdal intégré (PRO) est solidaire du rotor (71) et entraîne un pignon planétaire (61) par l'intermédiaire d'un groupe de satellites (62) qui sont montés sur un porte-satellites (63) solidaire du boîtier moteur (70) ou du boîtier d'étrier (20). Ce pignon planétaire (61) entraîne en rotation (C5) la partie d'entrée (51) de l'arbre d'actionneur (5). Dans cet exemple, le motoréducteur porte une forme d'entraînement de motoréducteur coopérant avec une forme d'entraînement (50) de l'arbre d'actionneur, par exemple une broche de motoréducteur coopérant avec un logement d'entraînement dans l'extrémité 51 de l'arbre d'actionneur.

Du côté intérieur de l'étrier, cet actionneur comprend une partie de réduction épicycloïdale DPR, qui entraîne en rotation C4 un mécanisme vis-écrou NS lequel restitue un déplacement linéaire T1 du piston 1.

La partie de réduction épicycloïdale DPR comprend un premier PR2 et un deuxième trains épicycloïdaux monté en série, chacun entraîné en entrée par son pignon planétaire 31, 41. Ces deux trains fournissent chacun une réduction en sortie par leur porte-satellites 33, 43, et leurs les satellites 32, 42 engrènent selon la première orientation D1 avec la denture 101 du piston 1, ici une denture droite c'est à dire longitudinale. Alternativement, cette denture est aussi prévue en version hélicoïdale, et peut être de tout type de profils pouvant être employé pour une telle couronne de train épicycloïdal.

Le mécanisme vis-écrou NS est entraîné en rotation par le porte-satellite 43 de sortie de la partie de réduction DPR. Le piston 1 est fixé en rotation, ici par les encoches 105 portées par la face d'appui que réalise le fond 104 du piston, et qui coopèrent avec des accidents de forme (non représentés) dépassant de la garniture de frottement au contact de cette face d'appui 104.

Sous l'effet de la rotation C4 imprimée par l'étage de réduction DPR, ce piston 1 est déplacé en translation longitudinale (ici vers la droite dans le sens du serrage) par coopération de sa denture intérieure 101 selon la deuxième orientation D2 avec un élément fileté entraîné en rotation par le porte-satellites 43 du deuxième train épicycloïdal. Dans certains modes de réalisation, cet élément fileté est par exemple solidaire avec le porte-satellites 43. Dans l'exemple présenté ici, c'est le porte-satellite 43 lui-même qui porte un filetage mâle 431 formé dans la même pièce que celle qui porte ou forme les arbres des satellites 42.

Lorsque la vis formée par le porte-satellites 43 déplace sur le piston 1 dans le sens du serrage, ce dernier avec un effort F1 appuie sur la garniture 17 de frottement. De façon connue, cette dernière enserre ainsi la piste de frottement d'un rotor ou disque de frein avec une autre garniture de frottement, laquelle prend appui dans la direction opposée sur les doigts d'étrier 201.

En réaction à cet effort de serrage, ce porte-satellites 43 reçoit un effort axial dirigé dans le sens opposé. Il transmet cet effort axial par sa face située du côté de l'étrier (ici sur la gauche de la figure) à l'arbre d'actionneur 5, lequel le transmet au boîtier d'étrier 20 par une flasque 52 dépassant radialement et qui est solidaire de cet arbre 5.

Dans l'exemple de la FIGURE 1, la face de poussée du porte-satellite 43 appuie sur une collerette extérieure portée par un palier de butée 44, par exemple un palier lisse à friction en bronze ou en PTFE, inséré dans un alésage axial du porte-satellite 43. Ce palier de butée 44 s'appuie lui-même axialement sur la collerette extérieure d'un insert de poussée 54. Ce dernier est logé coaxialement à l'intérieur du palier de butée 44 et présente un alésage borgne dont le fond (sur la droite de la figure) s'appuie axialement sur l'extrémité 55 de l'arbre d'actionneur 5.

Dans la variante des FIGURE 2 et FIGURE 5 à FIGURE 7, la face de poussée du porte-satellites 43 transmet cet effort axial au même insert de poussée 54, par sa face située du côté de l'étrier (ici sur la gauche de la figure), mais par l'intermédiaire d'une butée à roulement de piston 44a permettant une charge plus importante et une moindre résistance en rotation. Les efforts radiaux, plus faibles, sont transmis par un palier radial de piston, ici un palier lisse à friction par exemple en bronze ou en PTFE.

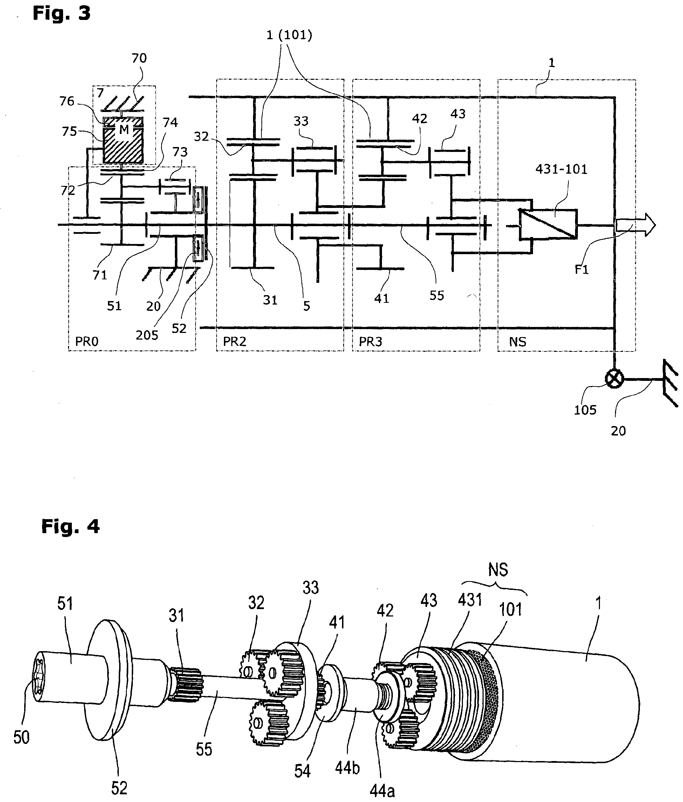

Dans d'autres modes de réalisation, il est aussi prévu (optionnellement) un train épicycloïdal amont PR1 séparé du moteur M, qui produit une première réduction. Ce train amont peut être disposé du côté extérieur de l'étrier, ou comme illustré par exemple en FIGURE 4 être disposé du côté intérieur de l'étrier c'est-à-dire du côté intérieur par rapport au palier qui maintient 51 l'arbre d'actionneur 5 et reçoit 52 la charge axiale venant du piston 1.

### Fabrication du piston

Les FIGURE 9 à FIGURE 14 illustrent ainsi un exemple de mode de réalisation de l'invention, à travers différentes étapes de fabrication d'un piston de frein dans une version avec denture intérieure à double orientation.

A partir d'une plaque métallique bidimensionnelle, on forme la denture par estampage matriciel, de préférence par forgeage, c'est à dire par déformation plastique à froid mais possiblement aussi à chaud mais sur un matériau en phase solide (c'est à dire à une température inférieure à sa température de fusion voire à sa température de transition vitreuse). La plaque de départ est de préférence plane, mais possiblement aussi selon une surface ouverte réglée mais non plane.

Cet estampage est réalisé par exemple par des techniques connues, par exemple en une ou plusieurs passes comprenant chacune une application sur la surface de la plaque d'une matrice présentant une forme complémentaire à la denture recherchée.

Comme illustré en FIGURE 9 la plaque obtenue 10a présente une denture croisée qui combine plusieurs orientations.

La première orientation, selon la direction D1, forme une série de sillons parallèles entre eux, qui formera ultérieurement la denture périphérique d'un engrenage intérieur, par exemple avec le profil transversal de dents d'engrenage classiques. Dans le cas présent pour une denture droite, la direction D1 est ainsi parallèle à une direction dite longitudinale A1L, définie comme parallèle à l'axe A1 ultérieur du piston à réaliser.

Dans le cas présent, la deuxième orientation, selon la direction D2, forme une série de sillons parallèles entre eux, qui formera ultérieurement un filetage intérieur, par exemple avec le profil transversal d'un filet classique. Comme illustré, cette direction D2 forme un angle AD2 avec la direction dite transversale A1T, perpendiculaire à la direction longitudinale A1L. Cet angle est déterminé en fonction du pas choisi pour le filetage à obtenir.

Comme illustré sur les figures, on comprend que cette denture à deux orientations croisée forme ainsi des dents (partie dépassant par rapport au fond des sillons) formant une excroissance interrompue, ressemblant plus ou moins à des pyramides. Cependant, bien que chaque motif de denture ne soit pas continu dans ses reliefs comme peut l'être une denture classique mono-orientation, chacun de ces motifs est identique à ou compatible avec une denture classique par la continuité de ses sillons. Dans chacune de ses orientations, la denture combinée ainsi obtenue est donc parfaitement compatible avec les reliefs d'une denture classique qui lui correspond de façon complémentaire. Ainsi, la denture intérieure combinée bi-orientations obtenue est à la fois compatible avec la denture extérieure classique du pignon et avec la denture extérieure classique de la vis avec lesquelles elles doivent coopérer lors du fonctionnement.

Cet estampage est appliqué par exemple par une ou plusieurs matrices présentant une forme complémentaire de la denture définitive. Alternativement, il est appliqué par plusieurs matrices successives présentant chacune une forme complémentaire aux sillons de l'une des orientations.

L'estampage peut être réalisé par pressage alternatif d'une matrice plane, ou roulage sous pression sous une matrice arrondie, ou toute autre méthode connue.

Optionnellement mais non obligatoirement, l'étape d'estampage de denture est appliquée à une plaque métallique continue ou semi-continue. C'est-à-dire que cette plaque présentant au moins une dimension, par exemple sa dimension longitudinale L1, qui est suffisamment grande pour recevoir une denture réalisant la surface intérieure d'une pluralité d'exemplaires du piston à réaliser. Par exemple, la denture peut être estampée de façon continue directement en sortie de laminage.

L'estampage est réalisé par exemple par pressage simultané de deux matrices coordonnées entre elles, appliquées sur les deux faces opposées 101 et 102 de la plaque, donnant ainsi des motifs en forme de creux visibles en FIGURE 10 et FIGURE 11 sur la face extérieure 102 opposée à la face fonctionnelle 101 devenant la face intérieure.

Comme illustré en FIGURE 10, après estampage et finition complète de la denture sur la surface fonctionnelle 101 de la plaque initiale, on courbe la plaque métallique avec sa surface fonctionnelle 101 du côté intérieure, selon une forme cylindrique 10b autour d'un axe A1 parallèle à direction longitudinale A1L, par exemple autour d'un mandrin cylindrique possiblement lisse.

De préférence, comme on le voit en FIGURE 11, le cylindre complet ainsi obtenu 10c est alors soudé 108 sur la jointure de ses bords opposés, ici de façon longitudinale.

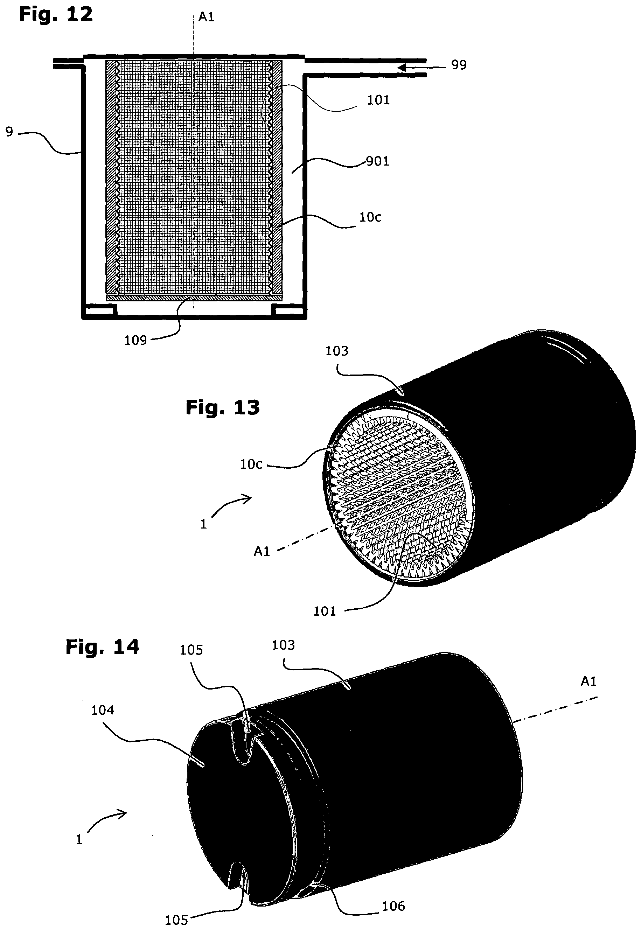

Comme illustré en FIGURE 12, on insère le cylindre 10c dans un moule définissant la forme extérieure future du piston à fabriquer. En injectant un matériau durcissable dans l'espace 901 entourant la surface extérieure périphérique 102 du cylindre, on réalise ainsi une paroi extérieure 103 intimement liée au cylindre métallique 10c. Cet ensemble réalise ainsi un piston bi-matière 1 dont la surface intérieure 101 est formée par la surface fonctionnelle de la plaque estampée et mise en forme, comme illustré ici en FIGURE 13 et FIGURE 14.

Dans le présent exemple, la forme extérieure du piston est prévue avec des encoches 105 antirotation et une rainure périphérique 106 prévue pour recevoir un joint, par exemple anti poussières ou pour l'étanchéité à la pression hydraulique.

Dans certains modes de réalisation, en fonction des besoins, le moule est agencé pour former une paroi de fond 104 fermant l'extrémité du cylindre 10c et donc du piston 1 ainsi obtenu.

Optionnellement, comme dans le présent exemple, cette paroi de fond est obtenu en disposant une plaque 109 circulaire au fond du moule 9, par exemple avant le cylindre 10c, qui formera ainsi un insert (par exemple métallique) renforçant le fond 104 du piston, par exemple dans le but de réaliser un piston utilisable dans un étrier mixte à actionnement hydraulique et électrique.

D'autres méthodes sont envisagées pour réaliser cette paroi de fond 104, par exemple un noyau amovible inséré à l'intérieur du cylindre 10c pour le moulage.

Bien sûr, l'invention n'est pas limitée aux exemples qui viennent d'être décrits et de nombreux aménagements peuvent être apportés à ces exemples sans sortir du cadre de l'invention.

### Nomenclature

### FIGURE 1 à FIGURE 8

- DPR: réduction à double train épicycloïdal
- NS: mécanisme vis-écrou
- C5: couple d'entrée
- C4: rotation du porte-satellite / vis
- T1: translation du piston / écrou
- PR0: train épicycloïdal amont
- PR1: train épicycloïdal amont réducteur de moteur
- PR2: premier train épicycloïdal de réducteur double
- PR3: deuxième train épicycloïdal de réducteur double
- 1: piston de frein / couronne filetée
- 2: étrier de frein à disque
- 20: boîtier d'étrier
- 204: flasque de fixation moteur
- 205: butée à roulement d'arbre d'actionneur
- 31: pignon planétaire d'entrée de premier train épicycloïdal
- 32: satellites de premier train épicycloïdal
- 33: porte-satellites de premier train épicycloïdal
- 41: pignon planétaire d'entrée de deuxième train épicycloïdal
- 42: satellites de deuxième train épicycloïdal
- 43: élément fileté / porte-satellites de deuxième train épicycloïdal
- 44: palier de butée de piston
- 44a: butée à roulement de piston
- 44b: palier radial de piston
- 50: logement d'entraînement de l'arbre d'actionneur
- 51: arbre d'entrée d'actionneur
- 52: flasque d'appui de l'arbre d'entrée d'actionneur
- 54: insert de poussée
- 55: extrémité de l'arbre de l'actionneur
- 61, 71: pignon planétaire d'entrée de train épicycloïdal amont / intégré
- 62, 72: satellites de train épicycloïdal amont / intégré
- 63, 73: porte-satellites de train épicycloïdal amont / intégré
- 64, 74: couronne de train épicycloïdal amont / intégré
- 75: rotor de moteur
- 76: stator de moteur
- 70: boîtier de motoréducteur

### FIGURE 9 à FIGURE 14

- A1: axe de piston
- A1L: direction longitudinale de la plaque
- A1T: direction transversale de la plaque
- AD2: angle de deuxième orientation de denture
- D1: première orientation de denture
- D2: deuxième orientation de denture
- L1: dimension longitudinale de la plaque
- 9: moule de piston
- 99: injection de matériau durcissable
- 101: face fonctionnelle / denture intérieure
- 102: face extérieure de la plaque
- 103: paroi extérieure du piston
- 104: paroi de fond du piston
- 105: encoches antirotation
- 106: rainure de joint
- 108: soudure des bords de la plaque
- 109: plaque de fond de piston
- 201: doigt(s) d'étrier
- 431: filetage extérieur de la vis / porte-satellites de deuxième train épicycloïdal
- 901: espace du moule entourant le cylindre
- 10a: plaque plane avec denture
- 10b: plaque en cours de mise en forme
- 10c: cylindre formé en cours de soudure

## Revendications

1. Dispositif de réducteur ou d'actionneur à sortie linéaire et entraînement par moteur rotatif, notamment actuateur linéaire de freinage électrique, du type comprenant au moins un train épicycloïdal (PR2, PR3) incluant un groupe de satellites (32, 42) en rotation selon un axe de train (A1) autour d'un pignon planétaire (31, 41) et à l'intérieur d'une couronne (1) circulaire coaxiale audit train planétaire, où lesdits satellites sont portés par un porte-satellites (33, 43) et engrènent à la fois avec une denture extérieure dudit pignon planétaire et avec une denture intérieure, formée dans ladite couronne circulaire selon un premier motif présentant une première orientation déterminée (D1),
ledit train épicycloïdal recevant un entraînement en rotation (C5) et formant au moins un étage de réduction (DPR) pour entraîner en rotation (C4) un mécanisme vis-écrou (NS) dont la sortie produit un déplacement linéaire (T1) selon une direction (A1) coaxiale audit train épicycloïdal,
ledit dispositif étant **caractérisé en ce que** ledit train épicycloïdal (PR3) entraîne un élément fileté mâle (43) qui lui est coaxial, lequel coopère avec un filetage femelle formé dans la surface intérieure de ladite couronne (1) selon un deuxième motif présentant une deuxième orientation (D2) différente de la première orientation (D1), ladite couronne (1) formant ainsi une couronne filetée qui coopère avec ledit élément fileté mâle (43) pour former ledit mécanisme vis-écrou (NS),
ladite couronne présentant ainsi des reliefs de filetage femelle entrecroisés avec des reliefs de denture intérieure pour former une denture croisée (101) qui est apte à fonctionner aussi bien en denture de couronne de train épicycloïdal qu'en filetage d'écrou.

2. Dispositif selon la revendication précédente, **caractérisé en ce que** l'étage de réduction épicycloïdal (DPR) comprend au moins deux trains épicycloïdaux (PR2, PR3) coaxiaux dont les satellites (32, 42) engrènent avec la denture intérieure (101) d'une même couronne (1).

3. Dispositif selon la revendication précédente, **caractérisé en ce que** la couronne (1) présente une denture (101) croisée qui est compatible avec les satellites (32, 42) d'au moins deux trains épicycloïdaux (PR2, PR3) contigus.

4. Dispositif selon l'une quelconque des revendications précédentes, **caractérisé en ce que** l'étage de réduction épicycloïdal (DPR) comprend au moins deux trains épicycloïdaux (PR1, PR2, PR3) montés en série, dont chacun est entraîné en entrée par son pignon planétaire (61, 31, 41) et fournit en sortie un entraînement par la rotation de son porte-satellites (63, 33, 43).

5. Actionneur linéaire à entraînement électrique pour frein de véhicule, **caractérisé en ce qu'il** comprend un dispositif selon l'une quelconque des revendications précédentes, dans lequel la couronne filetée (101) est solidaire de ou forme un piston de frein (1) qui est maintenu fixe en rotation (105) et est agencé pour que son déplacement (T1) exerce un effort de serrage (F1) par déplacement linéaire d'au moins une garniture de frottement (17) vers une piste de frottement.

6. Actionneur selon la revendication précédente, agencé pour être intégré à ou monté dans un étrier (2) de frein à disque comprenant deux branches (201, 202) en vis-à-vis qui chevauchent la périphérie d'un disque de frein,
**caractérisé en ce qu'**il comprend un arbre d'actionneur (5), coaxial au piston (1), et qui est prévu pour traverser l'une (202) desdites branches d'étrier et porte une flasque d'appui (52) agencée pour prendre un appui axial sur ladite branche (202) depuis l'intérieur de l'étrier ;
**en ce que** la partie d'extrémité (55) dudit arbre, située du côté intérieur de l'étrier, porte l'étage de réduction épicycloïdal (DPR) et le piston de frein (1) ;
et **en ce que** la partie d'entrée (51) dudit arbre, située du côté intérieur de l'étrier, porte ou est prévue pour recevoir un moteur (M) ou un motoréducteur électrique (7).

7. Actionneur selon la revendication précédente, **caractérisé en ce que** la partie d'entrée (51) de l'arbre d'actionneur (5) est entraînée en rotation par un train épicycloïdal amont dit intégré (PRO) disposé coaxialement à un moteur comportant un rotor intérieur (71) mobile à l'intérieur d'un stator (72) extérieur solidaire d'un boîtier de moteur (70) ou du boîtier (20) de l'étrier, de telle façon que la couronne (74) dudit train (PRO) est solidaire du rotor (71) et entraîne un pignon planétaire (71) par l'intermédiaire d'un groupe de satellites (72) montés sur un porte-satellites (73) solidaire du boîtier moteur (70) ou du boîtier d'étrier (20), ledit pignon planétaire (71) entraînant (C5) la partie d'entrée (51) de l'arbre d'actionneur (5).

8. Etrier (2) de frein à disque comprenant deux branches (201, 202) en vis-à-vis qui chevauchent la périphérie d'un disque de frein, **caractérisé en ce qu'il** comprend un actionneur selon l'une quelconque des revendications 5 à 7 qui est monté ou intégré dans ledit étrier.

9. Véhicule ou sous-ensemble de véhicule ou frein de véhicule, **caractérisé en ce qu'**il comprend au moins un étrier de frein selon la revendication 8 ou un actionneur de frein selon l'une quelconque des revendications 5 à 7 ou un dispositif selon l'une quelconque des revendications 1 à 4.

10. Procédé de fabrication d'un piston (1) cylindrique à denture intérieure, comprenant les étapes suivantes :
- fourniture d'une plaque métallique plane ou bidimensionnelle d'un matériau métallique ;
- formation sur au moins une face de ladite plaque d'au moins un motif de denture par déformation plastique par estampage ou emboutissage au moyen d'au moins une matrice de forme complémentaire à ladite denture ;
- mise en forme de ladite plaque (10a) par flexion plastique de façon à former un cylindre (10c) de révolution portant ladite denture sur sa surface intérieure (101) ;
- réalisation d'un piston (1) bi-matières présentant un espace intérieur délimité par la surface intérieure (101) dudit cylindre (10c), par coulée (99) d'au moins un matériau durcissable autour (901) de la surface extérieure (102) du cylindre au sein d'un moule (9) entourant ladite paroi, à une température inférieure à la température de fusion dudit cylindre, formant ainsi une paroi extérieure (103) dudit piston ;
et en ce que l'étape de formation de denture (10a) est réalisée avec une ou plusieurs matrices dont la forme est agencée pour réaliser une denture présentant au moins deux motifs entrecroisés présentant deux orientations (D1, D2) différentes ; dans lesquelles :
- la denture présente un premier motif réalisant une denture à sillons parallèles entre eux selon une première orientation (D1), répartis selon un premier axe (A1L) orienté de façon à entourer de façon uniforme l'axe de révolution (A1) du piston (1) une fois celui-ci formé, notamment selon une première orientation parallèle audit axe de révolution ; et
- ladite denture présente un deuxième motif réalisant un filetage hélicoïdal à un ou plusieurs filets selon une deuxième orientation (D2) croisant ladite première orientation (D1) selon un angle de filetage (A2T) déterminé.

11. Procédé selon la revendication précédente, **caractérisé en ce qu'**il comprend une étape de soudure (109) entre eux des deux bords de la plaque (10b) se rejoignant une fois celle-ci formée en cylindre (10c) et avant l'étape de coulée (99) de la paroi extérieure.

12. Procédé selon l'une quelconque des revendications 10 à 11, **caractérisé en ce que** l'étape d'estampage de denture est appliquée à une plaque métallique présentant au moins une dimension (L1) continue ou suffisamment grande pour recevoir une denture réalisant la surface intérieure d'une pluralité d'exemplaires dudit cylindre (10b, 10c).

13. Procédé selon l'une quelconque des revendications 10 à 12, **caractérisé en ce que** la paroi extérieure (103) du piston (1) est formée par coulée d'un matériau de type bakélite ou résine phénolique.

14. Procédé selon l'une quelconque des revendications 10 à 13, **caractérisé en ce que** l'étape de coulée (99) utilise un moule (9) agencé pour que le matériau coulé forme en outre une paroi (104) fermant l'une des extrémités du cylindre (10c), notamment après inclusion d'une pièce d'appui (109) métallique dans une position lui permettant de prendre appui longitudinalement sur la tranche de la paroi du cylindre (10c).

## Patentansprüche

1. Getriebe- oder Antriebsvorrichtung mit linearem Ausgang und Drehmotorantrieb, insbesondere ein elektrischer linearer Bremsaktuator, des Typs, der wenigstens ein Planetengetriebe (PR2, PR3) umfasst, das eine Gruppe von Planetenrädern (32, 42) umfasst, die sich um eine Getriebeachse (A1) um ein Sonnenrad (31, 41) drehen und innerhalb eines runden Hohlrads (1) sind, das koaxial zu dem Planetengetriebe ist, wobei die Planeten von einem Planetenträger (33, 43) getragen werden und sowohl mit einer Außenverzahnung des Sonnenrades als auch mit einer Innenverzahnung in Eingriff stehen, die in dem kreisförmigen Hohlrad in einem ersten Muster mit einer ersten bestimmten Ausrichtung (D1) ausgebildet ist,
wobei das Planetengetriebe einen Drehantrieb (C5) aufnimmt und wenigstens eine Untersetzungsstufe (DPR) zum Drehantrieb (C4) eines Schrauben-Mutter-Mechanismus (NS) bildet, dessen Abtrieb eine lineare Verschiebung (T1) in einer Richtung (A1) koaxial zu dem Planetengetriebe erzeugt,
wobei die Vorrichtung **dadurch gekennzeichnet ist, dass** das Planetengetriebe (PR3) ein Außengewindeelement (43) antreibt, das koaxial dazu ist und das mit einem Innengewinde zusammenwirkt, das in der Innenfläche des Hohlrades (1) in einem zweiten Muster ausgebildet ist, das eine zweite Ausrichtung (D2) hat, die sich von der ersten Ausrichtung (D1) unterscheidet, wobei das Hohlrad (1) somit ein Gewinde-Hohlrad bildet, der mit dem Außengewindeelement (43) zusammenwirkt, um den Schrauben-Mutter-Mechanismus (NS) zu bilden,
wobei das Hohlrad somit Innengewinde-Reliefs aufweist, die sich mit Innengewinde-Reliefs überschneiden, um eine Kreuzverzahnung (101) zu bilden, die sowohl für den Betrieb mit einer Verzahnung eines Hohlrades eines Planetengetriebes als auch mit Muttergewinden geeignet ist.

2. Vorrichtung nach dem vorhergehenden Anspruch, **dadurch gekennzeichnet, dass** die Planetenuntersetzungsstufe (DPR) wenigstens zwei koaxiale Planetengetriebe (PR2, PR3) umfasst, deren Planetenräder (32, 42) in die Innenverzahnung (101) desselben Hohlrades (1) eingreifen.

3. Vorrichtung nach dem vorhergehenden Anspruch, **dadurch gekennzeichnet, dass** das Hohlrad (1) eine Kreuzverzahung (101) aufweist, die mit den Planetenrädern (32, 42) von wenigstens zwei aneinander angrenzenden Planetengetrieben (PR2, PR3) kompatibel ist.

4. Vorrichtung nach einem der vorhergehenden Ansprüche, **dadurch gekennzeichnet, dass** die Planetenuntersetzungsstufe (DPR) wenigstens zwei in Reihe geschaltete Planetengetriebe (PR1, PR2, PR3) umfasst, von denen jedes eingangsseitig durch sein Sonnenrad (61, 31, 41) angetrieben wird und ausgangsseitig durch die Drehung seines Planetenträgers (63, 33, 43) einen Antrieb liefert.

5. Elektrisch angetriebener linearer Aktuator für eine Fahrzeugbremse, **dadurch gekennzeichnet, dass** er eine Vorrichtung nach einem der vorhergehenden Ansprüche umfasst, bei der das Gewinde-Hohlrad (101) fest mit einem Bremskolben (1) verbunden ist oder einen Bremskolben (1) bildet, der drehfest (105) gehalten wird und so angeordnet ist, dass seine Verschiebung (T1) eine Klemmkraft (F1) durch lineare Verschiebung mindestens eines Reibbelags (17) in Richtung einer Reibbahn ausübt.

6. Aktuator nach dem vorhergehenden Anspruch, der so angeordnet ist, dass er mit einem Scheibenbremssattel (2) integriert oder in diesem montiert werden kann, der zwei gegenüberliegende Arme (201, 202) aufweist, die den Umfang einer Bremsscheibe überlappen,
**dadurch gekennzeichnet, dass** er eine zum Bremskolben (1) koaxiale Aktuatorswelle (5) aufweist, die dazu bestimmt ist, einen (202) der Bremssattelarme zu durchqueren, und einen Auflageflansch (52) trägt, der so angeordnet ist, dass er sich von der Innenseite des Bremssattels her axial auf dem Arm (202) abstützt;
dass der Endabschnitt (55) dieser Welle, der sich auf der Innenseite des Bremssattels befindet, die Planetenuntersetzungsstufe (DPR) und den Bremskolben (1) trägt;
und dass der Eingangsabschnitt (51) der Welle, der sich auf der Innenseite des Bremssattels befindet, einen elektrischen Motor (M) oder Getriebemotor (7) trägt oder zur Aufnahme eines solchen geeignet ist.

7. Aktuator nach dem vorhergehenden Anspruch, **dadurch gekennzeichnet, dass** der Eingangsabschnitt (51) der Aktuatorswelle (5) durch ein vorgeschaltetes sogenanntes integriertes Planetengetriebe (PRO) in Drehung versetzt wird, das koaxial zu einem Motor angeordnet ist, der einen inneren Rotor (71) aufweist, welcher Rotor innerhalb eines äußeren Stators (72) beweglich ist, welcher Stator fest mit einem Motorgehäuse (70) oder dem Gehäuse (20) des Bremssattels verbunden ist, derart, dass das Hohlrad (74) des Zahnrads (PRO) fest mit dem Rotor (71) verbunden ist und ein Sonnenrad (71) über eine Gruppe von Planetenrädern (72) antreibt, die auf einem Planetenträger (73) montiert sind, der fest mit dem Motorgehäuse (70) oder dem Bremssattelgehäuse (20) verbunden ist, wobei das Sonnenrad (71) den Eingangsabschnitt (51) der Aktuatorwelle (5) antreibt (C5).

8. Scheibenbremssattel (2) mit zwei gegenüberliegenden Arme (201, 202), die den Umfang einer Bremsscheibe überlappen, **dadurch gekennzeichnet, dass** er einen Aktuator nach einem der Ansprüche 5 bis 7 aufweist, der in dem Sattel montiert oder integriert ist.

9. Fahrzeug oder Fahrzeugunterbaugruppe oder Fahrzeugbremse, **dadurch gekennzeichnet, dass** sie wenigstens einen Bremssattel nach Anspruch 8 oder einen Bremsaktuator nach einem der Ansprüche 5 bis 7 oder eine Vorrichtung nach einem der Ansprüche 1 bis 4 umfasst.

10. Verfahren zur Herstellung eines innenverzahnten zylindrischen Kolbens (1), das die folgenden Schritte umfasst:
- Lieferung einer flachen oder zweidimensionalen Metallplatte aus einem metallischen Werkstoff;
- Bildung wenigstens eines Verzahnungsmusters auf wenigstens einer Seite der genannten Platte durch plastische Verformung durch Stanzen oder Tiefziehen mittels mindestens eines Stempels mit einer zu der genannten Verzahnung komplementären Form;
- Formen der Platte (10a) durch plastisches Biegen, um so einen Drehzylinder (10c) zu bilden, der die Zähne auf seiner Innenfläche (101) trägt;
- Herstellung eines Kolbens (1) aus zwei Werkstoffen, der einen durch die Innenfläche (101) des Zylinders (10c) begrenzten Innenraum aufweist, durch Gießen (99) mindestens eines härtbaren Materials um (901) die Außenfläche (102) des Zylinders herum in einer die Fläche umgebenden Form (9) bei einer Temperatur unterhalb der Schmelztemperatur des Zylinders, wodurch eine Außenwand (103) des Kolbens gebildet wird;
und dass der Bildungsschritt der Verzahnung (10a) mit einer oder mehreren Matrizen durchgeführt wird, deren Form so angeordnet ist, dass eine Verzahnung mit mindestens zwei sich schneidenden Mustern mit zwei verschiedenen Orientierungen (D1, D2) erzeugt wird; wobei :
- die Verzahnung ein erstes Muster aufweist, das eine Verzahnung mit zueinander parallelen Rillen in einer ersten Ausrichtung (D1) erzeugt, die entlang einer ersten Achse (A1L) verteilt sind, die so ausgerichtet ist, dass sie die Drehachse (A1) des Kolbens (1) nach dessen Bildung gleichmäßig umgibt, insbesondere in einer ersten Ausrichtung parallel zu der Drehachse; und
- wobei die Verzahnung ein zweites Muster aufweist, das ein schraubenförmiges Gewinde mit einem oder mehreren Gewindegängen in einer zweiten Orientierung (D2) erzeugt, die die erste Orientierung (D1) unter einem bestimmten Gewindewinkel (A2T) kreuzt.

11. Verfahren nach dem vorhergehenden Anspruch, **dadurch gekennzeichnet, dass** es einen Schritt des Verschweißens (109) der beiden Ränder der Platte (10b), die aufeinander treffen, nachdem diese zu einem Zylinder (10c) geformt worden ist, und vor dem Schritt des Gießens (99) der Außenwand umfasst.

12. Verfahren nach einem der Ansprüche 10 bis 11, **dadurch gekennzeichnet, dass** der Schritt des Stanzens von Zähnen auf eine Metallplatte mit mindestens einer Abmessung (L1) angewendet wird, die kontinuierlich oder groß genug ist, um Zähne aufzunehmen, die die Innenfläche einer Vielzahl von Kopien des Zylinders (10b, 10c) bilden.

13. Verfahren nach einem der Ansprüche 10 bis 12, **dadurch gekennzeichnet, dass** die Außenwand (103) des Kolbens (1) durch Gießen eines Materials vom Bakelit- oder Phenolharztyp gebildet wird.

14. Verfahren nach einem der Ansprüche 10 bis 13, **dadurch gekennzeichnet, dass** für den Gießschritt (99) eine Form (9) verwendet wird, die so angeordnet ist, dass das gegossene Material weiterhin eine Wand (104) bildet, die eines der Enden des Zylinders (10c) verschließt, insbesondere nach Einfügen eines metallischen Stützteils (109) in einer Position, die es ihm ermöglicht, in Längsrichtung auf dem Rand der Wand des Zylinders (10c) aufzuliegen.

## Claims

1. Reduction gear device or linear output actuator device having rotary motor drive, in particular an electric braking linear actuator, of the type comprising at least one epicyclic train (PR2, PR3) including a group of planet gears (32, 42) in rotation according to a train axis (A1) around a sun gear (31, 41) and inside a circular ring gear (1) coaxial with said planetary gearset, where said planet gears are borne by a planet carrier (33, 43) and engage both with an external toothset of said sun gear and with an internal toothset, formed in said circular ring gear according to a first pattern having a first determined orientation (D1),
said epicyclic train receiving a rotary drive (C5) and forming at least one reduction stage (DPR) in order to drive in rotation (C4) a nut-screw mechanism (NS) the output of which produces a linear displacement (T1) in a direction (A1) coaxial with said epicyclic train,
said device being **characterized in that** said epicyclic train (PR3) drives a male threaded element (43), coaxial therewith, which co-operates with a female threading formed in the inner surface of said ring gear (1) according to a second pattern having a second orientation (D2) different from the first orientation (D1), said ring gear (1) thus forming a threaded ring gear, which co-operates with said male threaded element (43) to form said nut-screw mechanism (NS),
said ring gear thus having female threading reliefs intersecting with the reliefs of the internal toothset to form a criss-cross toothset (101) which is capable of operating equally well as a ring gear toothset of an epicyclic train and as a nut thread.

2. Device according to the preceding claim, **characterized in that** the planetary reduction stage (DPR) comprises at least two coaxial epicyclic trains (PR2, PR3) the planet gears (32, 42) of which engage with the internal toothset (101) of one and the same ring gear (1).

3. Device according to the preceding claim, **characterized in that** the ring gear (1) has a criss-cross toothset (101) which is compatible with the planet gears (32, 42) of at least two contiguous epicyclic trains (PR2, PR3).

4. Device according to any one of the preceding claims, **characterized in that** the planetary reduction stage (DPR) comprises at least two epicyclic trains (PR1, PR2, PR3) mounted in series, each of which receives input drive via its sun gear (61, 31, 41) and supplies output drive via rotation of its planet carrier (63, 33, 43).

5. Electric drive linear actuator for a vehicle brake, **characterized in that** it comprises a device according to any one of the preceding claims, in which the threaded ring gear (101) is integral with or forms a brake piston (1) which is held fixed in rotation (105) and is arranged so that its displacement (T1) exerts a tightening stress (F1) by linear displacement of at least one friction lining (17) towards a braking surface.

6. Actuator according to the preceding claim, arranged to be integrated with or mounted in a disk brake caliper (2) comprising two facing legs (201, 202) which straddle the periphery of a brake disk,
**characterized in that** it comprises an actuator shaft (5), coaxial with the piston (1), and which is provided to pass through one (202) of said legs of the caliper and bears a support flange (52) arranged to be axially supported on said leg (202) from the inside of the caliper;
**in that** the end part (55) of said shaft, situated on the inner side of the caliper, bears the planetary reduction stage (DPR) and the brake piston (1);
and **in that** the input part (51) of said shaft, situated on the inner side of the caliper, bears or is provided to receive a motor (M) or an electric motor-reduction unit (7).

7. Actuator according to the preceding claim, **characterized in that** the input part (51) of the actuator shaft (5) is driven in rotation by an upstream epicyclic train called integrated epicyclic train (PRO) arranged coaxially with a motor comprising an internal rotor (71) mobile inside an external stator (72) integral with an motor housing (70) or with the caliper housing (20), such that the ring gear (74) of said train (PRO) is integral with the rotor (71) and drives a sun gear (71) via a group of planet gears (72) mounted on a planet carrier (73) integral with the motor housing (70) or with the caliper housing (20), said sun gear (71) driving (C5) the input part (51) of the actuator shaft (5).

8. Disk brake caliper (2) comprising two facing legs (201, 202) which straddle the periphery of a disk brake, **characterized in that** it comprises an actuator according to any one of claims 5 to 7 which is mounted on or integrated in said caliper.

9. Vehicle or vehicle sub-assembly or vehicle brake, **characterized in that** it comprises at least one brake caliper according to claim 8 or a brake actuator according to any one of claims 5 to 7 or a device according to any one of claims 1 to 4.

10. Method for manufacturing a cylindrical piston (1) having an internal toothset, comprising the following steps:
- providing a flat or two-dimensional metal plate made from a metal material;
- forming at least one tooth pattern on at least one face of said plate by inelastic deformation by stamping or embossing by means of at least one die having a shape complementary to said toothset;
- shaping said plate (10a) by inelastic bending so as to form a cylinder (10c) of revolution bearing said teeth on its inner surface (101);
- producing a bimaterial piston (1) having an inner space delimited by the inner surface (101) of said cylinder (10c), by casting (99) at least one hardenable material around (901) the outer surface (102) of the cylinder within a mould (9) surrounding said surface, at a temperature lower than the melting point of said cylinder, thus forming an outer wall (103) of said piston;
and in that the step of forming the toothset (10a) is carried out with one or more dies the shape of which is arranged to produce a toothset having at least two intersecting patterns having two different orientations (D1, D2); in which:
- the toothset has a first pattern producing a toothset having grooves parallel to one another according to a first orientation (D1), distributed along a first axis (A1L) oriented so as to uniformly surround the axis of revolution (A1) of the piston (1) once this is formed, in particular according to a first orientation parallel to said axis of revolution; and
- said toothset has a second pattern producing a spiral threading having one or more threads according to a second orientation (D2) crossing said first orientation (D1) at a determined thread angle (A2T).

11. Method according to the preceding claim, **characterized in that** it comprises a step of welding (109) together the two edges of the plate (10b) that meet when the latter is shaped into a cylinder (10c) and before the step of casting (99) the outer wall.

12. Method according to any one of claims 10 to 11, **characterized in that** the step of stamping the toothset is applied to a metal plate having at least one dimension (L1) that is continuous or sufficiently large to receive a toothset producing the inner surface of a plurality of examples of said cylinder (10b, 10c).

13. Method according to any one of claims 10 to 12, **characterized in that** the outer wall (103) of the piston (1) is formed by casting a material of the Bakelite or phenolic resin type.

14. Method according to any one of claims 10 to 13, **characterized in that** the casting step (99) uses a mould (9) arranged so that the cast material also forms a wall (104) closing one of the ends of the cylinder (10c), in particular after inclusion of a metal support part (109) in a position allowing it to be longitudinally supported on the rim of the wall of the cylinder (10c).
